# EUROPEAN PATENT APPLICATION

(11) **EP 4 307 487 A1**
(43) Date of publication of application: **17.01.2024**
(21) Application number: 22185208.0
(22) Date of filing: 15.07.2022
(51) Int. Cl.: H01R 13/52, H01R 13/504, B29C 45/14, H01R 13/436

(54) **CONNECTOR HOUSING WITH MOLDED-IN SEALS**

(71) Applicant: Aptiv Technologies Limited, St. Michael (BB)
(72) Inventor: SCHMIDT, Rainer, 90411 Nürnberg (DE); GOMEZ, Ricardo J., 90491 Nürnberg (DE); POSMIK, Mirko, 90763 Fürth (DE)
(74) Representative: Bardehle Pagenberg Partnerschaft mbB Patentanwälte Rechtsanwälte

(57) **Abstract**

The present disclosure relates to a connector housing 10; 20 for an electrical connector. The connector housing 10; 20 comprises a housing body 11; 21 having a first opening 12; 22 and a second opening 13; 23. Further, the connector housing 10; 20 comprises a first seal 14; 24 and a second seal 15; 25. Moreover, the connector housing 10; 20 comprises a connection element 16; 26 connecting the first seal 14; 24 and the second seal 15; 25. The first seal 14; 24 is molded to inner walls of the first opening 12; 22 and the second seal 15; 25 is molded to inner walls of the second opening 13; 23, wherein the first seal 14; 24, the second seal 15; 25, and the connection element 16; 26 are integrally formed.

## Description

### Field of the Invention

The present disclosure relates to a connector housing for an electrical connector, an electrical connector, a modular connector assembly, and a method for manufacturing a connector housing.

### Background

Electrical connectors that include a terminal and/or another electrical conductor must regularly be sealed against dust, moisture, liquid and/or dirt. Otherwise, short circuits and/or other impairments can be the result. A wide range of requirements are placed on respective seals for electrical connectors, which may vary depending on the area of application. However, several generally applicable requirements regularly exist for seals, as set out below, whereby is it understood that this listing is not exhaustive.

Firstly, it is usually necessary to implement a seal that can withstand certain loads, such as vibrations, without the sealing effect being impaired. Particularly, it is necessary for the seal to remain in position when subjected to loads.

Secondly, requirements are regularly set for seals regarding the necessary installation space. Especially, if the available installation space is limited, e.g. in a vehicle, the installation space required for sealing is usually also limited.

Thirdly, seals must meet certain requirements regarding assembly. On the one hand, it must be ensured that the seal is not damaged during assembly. On the other hand, assembly must not be so complex that it causes difficulties for the worker.

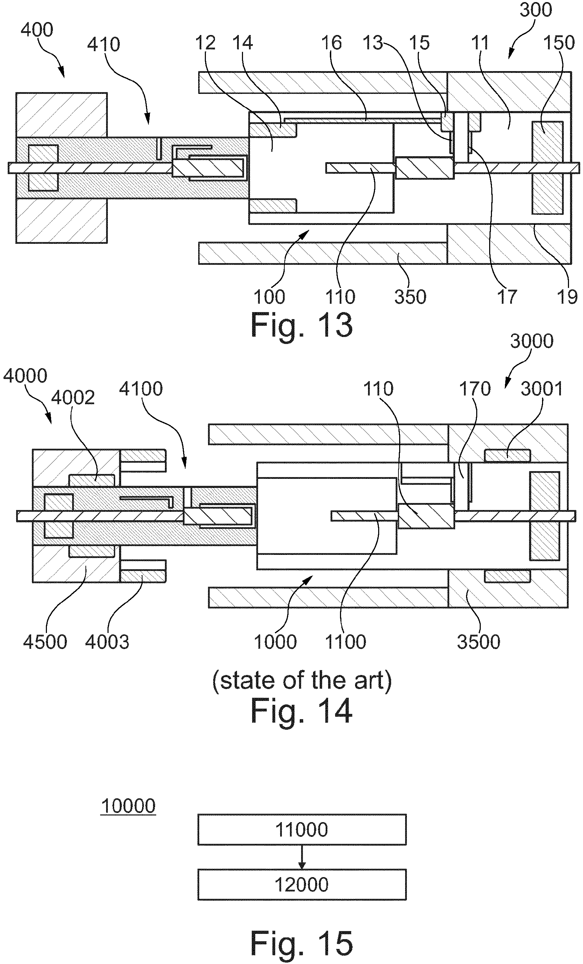

Existing seals for electrical connectors, however, have various disadvantages and/or do not or only partially meet the requirements mentioned above. This is set out below for a modular connector assembly from the automotive sector that is schematically depicted in Fig. 14.

The modular connector assembly 3000 of Fig. 14 comprises an electrical connector 1000 and a carrier housing 3500 in which the electrical connector 1000 is arranged.

The electrical connector 1000 comprises a terminal 1100, a housing body 110 having a first opening for receiving a counter connector 4100 of a modular counter connector assembly 4000, and a second opening in which a terminal position assurance element (TPA) 170 is arranged. To avoid that dust, moisture, liquid and/or dirt reaches the inside of the electrical connector 1000 through the first opening and the second opening, sealings are provided such that a space between the carrier housing 3500 and the electrical connector 1000 is sealed when the modular counter connector assembly 4000 is inserted. Particularly, as depicted, a first seal 3001 is arranged between the carrier housing 3500 and the electrical connector 1000, i.e. the housing body 110. Further, a second seal 4002 is arranged in the modular counter connector assembly 4000 between the counter connector 4100 and a respective counter carrier housing 4500. Moreover, a third seal 4003 is arranged on a seal holder of the counter carrier housing 4500 to seal the counter carrier housing 4500 and the carrier housing 3500, when mated. The modular connector assembly 3000, the respective modular counter connector assembly 4000, and particularly the configuration of the seals have several disadvantages.

Firstly, the seals regularly fail to withstand the occurring loads, such as vibrations and/or shock loads. This is as the seals are manually arranged and tend to be displaced, at least if no additional seal retention elements are provided.

Secondly, it has been shown in practice that the required installation space is often too large for many applications, thus complicating or even limiting the application of the connector assembly 3000 and the respective modular counter connector assembly 4000.

Thirdly, the modular connector assembly 3000 and the respective modular counter connector assembly 4000 are disadvantageous regarding the assembly of the seals. On the one hand, due to the manual assembly the seals tend to get damaged and/or contaminated during assembly. On the other hand, the assembly is complex such that a slow and/or incorrect assembly may take place. Further, as three seals in addition to mat seals must be installed within two different components, namely the modular connector assembly 3000 and the respective modular counter connector assembly 4000, a high assembly effort is caused.

Even further, the carrier housing 3500 must be sealed before inserting the electrical connector 1000 so that no dust, moisture, liquid and/or dirt penetrates that could later enter the connector 1000 after insertion. Furthermore, the connector 1000 must also be undamaged as well as free of dust, moisture, liquid and/or dirt, before being inserted in carrier 3500. Which is difficult and/or complex when the radial seal is exposed, as it is with seal 3001 in connector 1000.

Thus, it is an object of the present disclosure to provide a connector housing for an electrical connector, an electrical connector, a modular connector assembly, and a method for manufacturing a connector housing that overcome the aforementioned drawbacks at least partially.

### Description of the invention

This object is achieved, at least partly, by a connector housing for an electrical connector, an electrical connector, a modular connector assembly, and a method for manufacturing a connector housing according to the present disclosure.

Particularly, the object is achieved by a connector housing for an electrical connector. The connector housing comprises a housing body having a first opening and a second opening. The housing body may comprise a bent sheet metal and/or a plastic, particularly a reinforced plastic. Moreover, the housing body may be manufactured by injection molding or casting. Further, it is understood that the housing body may comprise a plurality of parts.

Further, the connector housing comprises a first seal and a second seal. Moreover, the connector housing comprises a connection element connecting the first seal and the second seal. The first seal is molded to inner walls of the first opening and the second seal is molded to inner walls of the second opening, wherein the first seal, the second seal, and the connection element are integrally formed.

It is understood that the first seal and/or the second seal may serve to achieve a sealing together with an element inserted into the respective opening. Further, it is understood that the first seal and/or the second seal may serve to seal the inside of the connector housing against dust, moisture, liquid and/or dirt. Hence, a terminal and/or another electrical conductor inside the connector housing may be protected. Moreover, the connector housing may comprise more than two seals and accordingly more than one connection element. Further, the term "inner walls" may refer to one or more surfaces associated with the respective opening. For example, if the first opening is a cylindrical recess, the inner walls may be the lateral surface of the cylindrical recess. Moreover, "integrally formed" may refer to the aspect that no material boundary may be identified between the first seal, the second seal, and the connection element. Furthermore, "integrally formed" may refer to the aspect that the first seal, the second seal, and the connection element are formed as one connected element.

By the above configuration of the connector housing several advantages are achieved, as set out in the following.

Firstly, since the seals are molded to said inner walls, they withstand higher loads, due to a better adhesion. Further, the seal may act as a damper and allow the system a better performance against higher vibration loads.

Secondly, since the first seal and the second seal are molded to said inner walls and not to the outside of the housing body, the required installation space is reduced. This is particularly beneficial for confined installation spaces.

Thirdly, the above-described disadvantages regarding assembly are at least partially overcome. Since the seals are not manually assembled, they are less prone to get damaged and/or contaminated during assembly. Further, as the seals are molded to said inner walls, they are protected during further assembly of the connector housing. Moreover, since the first seal, the second seal, and the connection element are integrally formed, i.e. are molded as one element, the assembly effort is reduced compared to embodiments where several separate seals are manually arranged.

Further, if the connector housing is to be arranged in a carrier housing, e.g. in a modular configuration, then additional advantages are at hand. Particularly, the carrier housing does not need to be sealed before inserting the electrical connector. This is as no dust, moisture, liquid and/or dirt that penetrated inside the carrier housing could later enter the connector housing after assembly, as the connector housing is sealed itself. Further, since the seals are provided in the housing body no seals and/or seal holders are required for sealing a space between the connector housing and a potential carrier housing.

The first seal, the second seal, and the connection element may be injection molded. By injection molding the first seal, the second seal, and the connection element, the adhesion of the seals to the housing body may be increased such that they may stably remain in position when subjected to external loads. Optionally the first seal, the second seal, and the connection element are injection molded with a single injection into the housing body. Further optionally the first seal, the second seal, and the connection element are injection molded through a single injection point into the housing body. Hence, the material structure of the first seal, the second seal, and the connection element may be homogeneous, i.e. without weld lines. Moreover, the first seal, the second seal, and the connection element maybe provided efficiently, i.e. with few steps and/or in less time.

The connection element may have an elongated shape which optionally extends along an inside of the housing body. By the elongated shape, it is avoided that the connection element requires much material. Moreover, by extending along the inside of the housing body it can be avoided that the connection element is a disturbing element on the outside of the housing body. Further optionally the connection element has a substantially circular cross-section. Substantially circular cross-sections have proven to allow for a fast and homogeneous flow during molding and particularly injection molding such that seals of high quality can be quickly manufactured. The term "substantially" according to the present application may refer to the aspect that not the geometrically strict form is required, but e.g. also tolerance-related deviations are possible. Moreover, the connection element may have an elongated shape which optionally extends along an outside of the housing body. Said outside channel may be an exposed channel.

Further, the housing body may comprise a channel through which the connection element extends, wherein the channel optionally extends from the first opening to the second opening. The channel may serve as an overflow channel for injection molding. Hence, when a polymer is injection molded into one of the first opening and the second opening the polymer may flow through the channel into the respective other opening. Thereby a fast manufacturing of the connector housing can be achieved. Further by the channel extending from the first opening to the second opening the complexity of the tools required for injection molding the first seal, the second seal, and the connection element may be reduced.

Moreover, the first seal and/or the second seal may be circumferential seals. Thereby it is understood that the first seal and/or the second seal may have closed contour. Hence, a circumferential sealing may be achieved for the first opening and/or the second opening.

Furthermore, the first seal and/or the second seal may be flush with an outside surface of the housing body. This allows a sealing to be achieved with an element inserted into the first and/or second opening and with an element abutting the outside of the housing body. Thus, the functionality of the first and/or the second seal can be increased. It goes without saying that the term "flush" is not to be interpreted in a geometrically strict sense. Rather common tolerances regarding flushness may be taken into account.

At least one of the first opening and the second opening may be configured to receive a counter connector. Hence, the first seal and/or the second seal may serve to achieve a sealing together with the counter connector. Hence, the inside of the connector housing may be protected against dust, moisture, liquid and/or dirt, at least when the counter connector is inserted. Accordingly, a terminal and/or another electrical conductor inside the connector housing may be protected. Since the sealing of a mating area may be achieved together with the counter connector, no seals must be provided at the counter connector. This allows simpler connection systems to be achieved and/or a reduction of parts, such as seals. It is understood that the at least one of the first opening and the second opening may be configured to receive a component intended to secure electrical components, such as terminal, being mounted in the connector housing.

Further, the first opening and the second opening may each be configured to receive a counter connector, wherein a central axis of the first opening is substantially parallel to a central axis of the second opening. Hence, the connector housing may allow for a first counter connector to be electrically connected to a second counter connector inside the connector body. Thus, a connection of the first counter connector to the second counter connector maybe sealed against dust, moisture, liquid and/or dirt. Particularly, a mating area of both counter connectors may be sealed by the first seal and the second seal respectively. Hence, no further seals may be required to seal the connection between said counter connectors. By the central axis of the first opening being substantially parallel to the central axis of the second opening the first counter connector may be connected to the second counter connector by an electrical contact pin which may be straight. Hence, the connector housing may serve as a linearly pluggable shunt housing.

Moreover, the first opening may be configured to receive a counter connector and the second opening may be configured to receive a terminal position assurance element. Hence, the terminal position assurance (TPA) element does not need to be provided with a seal, which may contribute to a reduction of assembly steps. Further, no sealing must be provided which would ensure that the outside of the connector housing, in which the TPA element is inserted, is sealed against dust, moisture, liquid and/or dirt. Thus, complexity, installation space and/or assembly steps may be reduced. Moreover, when the counter connector is inserted into the first opening, it is also sealed so that no further seal is necessary to seal a mating area of the counter connector.

Optionally a central axis of the first opening is substantially perpendicular to a central axis of the second opening. Hence, the terminal position assurance element can perpendicularly engage with a terminal. Further optionally the housing body has a third opening which is configured to receive a terminal. It is understood that this third opening may be exemplarily sealed by means of a mat seal. Further, alternatively, the second opening may be configured to receive a primary lock reinforcer.

The first seal, the second seal, and the connection element are optionally made from a liquid silicone rubber (LSR). Liquid silicone rubbers have proven to be advantageous for integrally forming the first seal, the second seal, and the connection element due to the relatively low viscosity. An exemplary liquid silicone rubber comprises the following components: Linear siloxanes, fillers, and additives. Particularly preferred liquid silicone rubbers are standard types, fluorosilicone types, oil-bleeding silicones, fastcuring types, and/or adhesion modified types. Nevertheless, it is understood that any other polymer may be used for the first seal and/or the second seal.

Further, the object is achieved by an electrical connector comprising a connector housing as specified above, and an electrical conductor being arranged at least partially inside the connector housing. The electrical conductor may comprise at least one of the following: an electrical contact pin, a terminal, a cable, a wire, or another electrically conductive element. The electrical connector may be inserted into the housing body. Further, the electrical conductor may be fixedly attached to the housing body, e.g. by overmolding. Since the electrical connector comprises a connector housing as specified above, it is understood that the respective advantages apply accordingly.

Said electrical connector may comprise a connector housing, wherein the first opening and the second opening are each configured to receive a counter connector, wherein a central axis of the first opening is substantially parallel to a central axis of the second opening. Hence, the connector housing may serve as a linear pluggable shunt housing. The electrical conductor may comprise at least one electrical contact pin extending from the first opening into second opening. Thus, the at least one electrical contact pin may establish an electrical connection between a first counter connector inserted into the first opening and a second counter connector inserted into the second opening.

Thereby the mating area of both counter connectors may be sealed by the first seal and the second seal respectively. Hence, no further seals may be required to seal the mating area of both counter connectors.

Further, the electrical connector may comprise a connector housing, wherein the first opening is configured to receive a counter connector and the second opening is configured to receive a terminal position assurance element, wherein optionally a central axis of the first opening is substantially perpendicular to a central axis of the second opening, wherein further optionally the housing body has a third opening which is configured to receive a terminal. Thereby the electrical conductor may be a terminal being at least partially received inside the third opening, and wherein a terminal position assurance element engaging with the terminal may be arranged in the second opening. It is understood that when the counter connector and the terminal position assurance element are inserted only the third opening may need further sealing, e.g. by a mat seal. Hence, the complexity of assembly and/or number of required seals is reduced, particularly when compared to the state of the art as described in the introduction.

Moreover, the object is achieved by a modular connector assembly comprising at least one electrical connector as described above, and a carrier housing in which the at least one electrical connector is arranged. The carrier housing may comprise a bent sheet metal and/or a plastic, particularly a reinforced plastic. Moreover, the carrier housing maybe manufactured by injection molding or casting. Further, it is understood that the carrier housing may comprise a plurality of parts. The modular connector assembly has the advantage that the carrier housing does not need to be sealed before inserting the electrical connector. This is as no dust, moisture, liquid and/or dirt that penetrated inside the carrier housing could later enter the connector housing after assembly, as the connector housing is sealed itself. Further, since the seals are provided in the housing body no seals and/or seal holders are required for sealing a space between the connector housing and the carrier housing. This allows the carrier housing to be designed more simply, i.e. without seal holders and/or seal retention elements. Moreover, the required installation space may be reduced. The at least one electrical connector may be arranged and/or fixed by a mechanical element either integrated in the carrier housing and/or by an external component such as a fixing screw or a clip. Further, said carrier housing may include a mechanical element, directly molded or externally mounted, that provides a mechanical fastening with a counterpart.

Furthermore, the object is achieved by a method for manufacturing a connector housing for an electrical connector, optionally the connector housing as specified above. Since the method relates to a connector housing, it is understood that the features and respective advantages described above regarding the connector housing also apply for the method described herein.

The method comprises the following steps: (a) injection molding a housing body with a first opening and a second opening, and thereafter (b) injection molding a first seal, a second seal, and a connection element with a single injection into the housing body. Thereby the connection element connects the first seal and the second seal, wherein the first seal is injection molded to inner walls of the first opening and the second seal is injection molded to inner walls of the second opening, wherein the first seal, the second seal, and the connection element are integrally formed.

The two-step injection molding process allows the manufacturing time of the connector housing to be significantly reduced. In addition, the connection element of the seals allows for a reduction of required injection points. Optionally the first seal, the second seal, and the connection element are injection molded through a single injection point into the housing body. Hence, the material structure of the first seal, the second seal, and the connection element may be homogeneous, i.e. without weld lines. The term of a "single injection" maybe also referred to as a "single injection shot".

### Brief description of the accompanying figures

In the following, the accompanying figures are briefly described:
- Fig. 1: is a perspective view of a connector housing according to a first embodiment of the present disclosure;
- Fig. 2: is a perspective cut view of the connector housing according to the first embodiment, wherein the seals are hidden;
- Fig. 3: is a cut view of the connector housing according to the first embodiment;
- Fig. 4: is a perspective view of the integrally formed first seal, second seal, and connection element according to the first embodiment;
- Fig. 5: is a perspective view of the connector housing according to the first embodiment with a terminal position assurance (TPA) element;
- Fig. 6: is a cut view of the connector housing according to the first embodiment with the terminal position assurance element;
- Fig. 7: is a perspective view of an electrical connector comprising a connector housing according to a second embodiment of the present disclosure;
- Fig. 8: is a perspective cut view of the electrical connector comprising the connector housing according to the second embodiment;
- Fig. 9: is a perspective and partially exploded view of a modular connector assembly according to the present disclosure;
- Fig. 10: is a perspective cut view of the modular connector assembly and a respective modular counter connector assembly;
- Fig. 11: is a cut view of the modular connector assembly mated with the modular counter connector assembly;
- Fig. 12: is a cut view of the modular connector assembly mated with the modular counter connector assembly;
- Fig. 13: is a schematic cut view of the modular connector assembly and the modular counter connector assembly;
- Fig. 14: is a schematic cut view of a modular connector assembly and a respective modular counter connector assembly according to the prior art, and
- Fig. 15: is a flowchart illustrating a method according to the present disclosure for manufacturing a connector housing.

### Detailed description of the figures

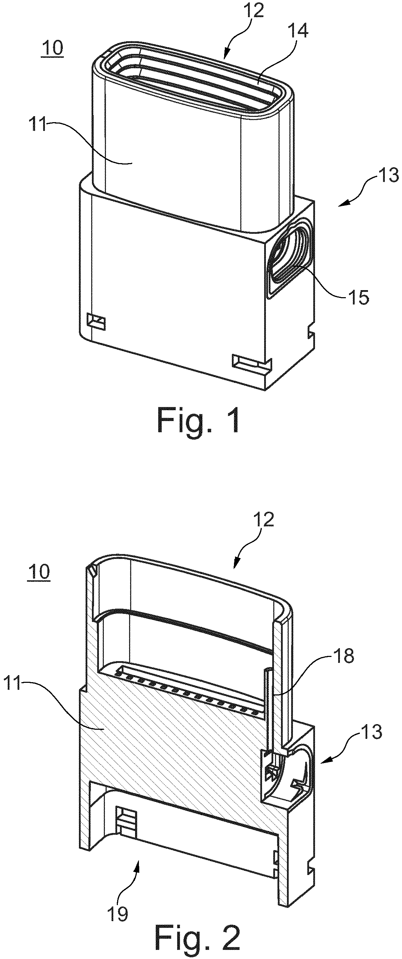

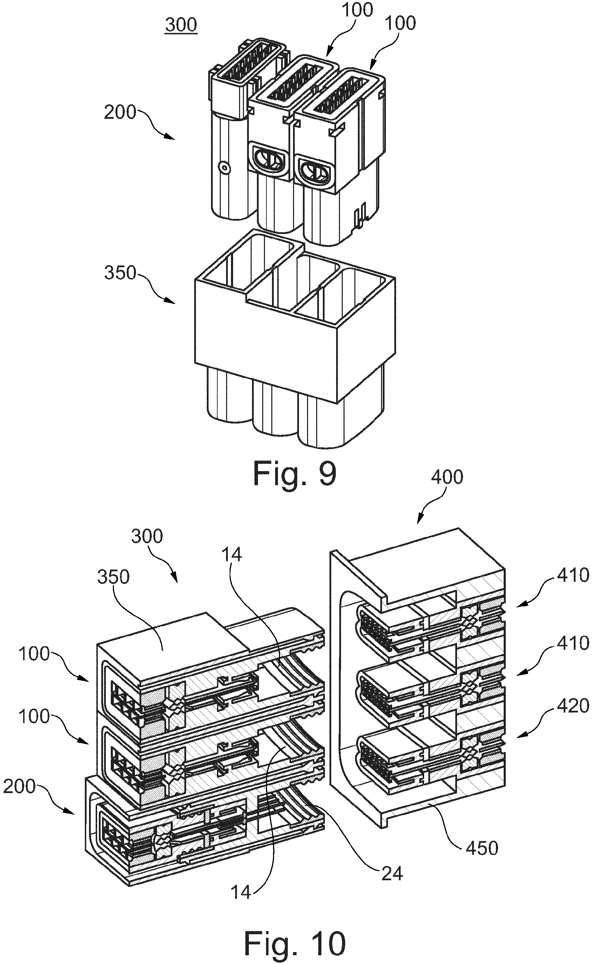

Figs. 1, 2, 3, 5, and 6 depict a connector housing 10 according to a first embodiment of the present disclosure. The connector housing 10 is for an electrical connector 100, as exemplary depicted in Figs. 9, 10, 11, and 13. As shown, the connector housing 10 comprises a housing body 11 having a first opening 12 and a second opening 13.

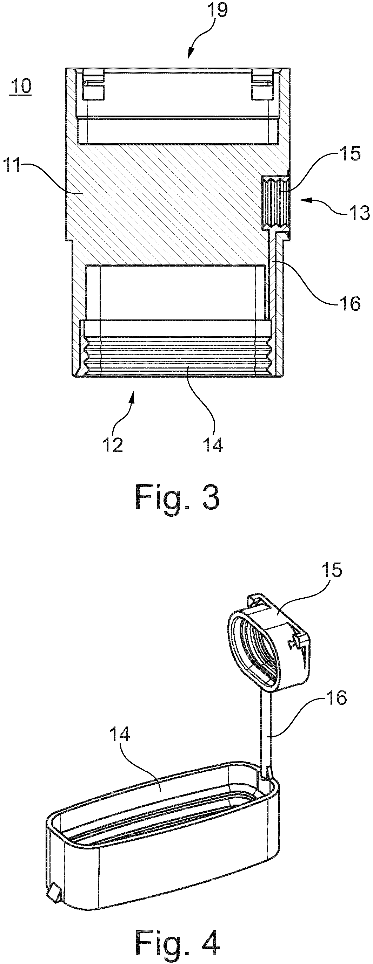

Further, as can be particularly seen in Fig. 3, the connector housing 10 comprises a first seal 14 and a second seal 15, and a connection element 16 connecting the first seal 14 and the second seal 15. Thereby the first seal 14 is molded to inner walls of the first opening 12 and the second seal 15 is molded to inner walls of the second opening 13.

Fig. 4 depicts the first seal 14 and the second seal 15, being connected by the connection element 16. Thereby the first seal 14, the second seal 15, and the connection element 16 are integrally formed.

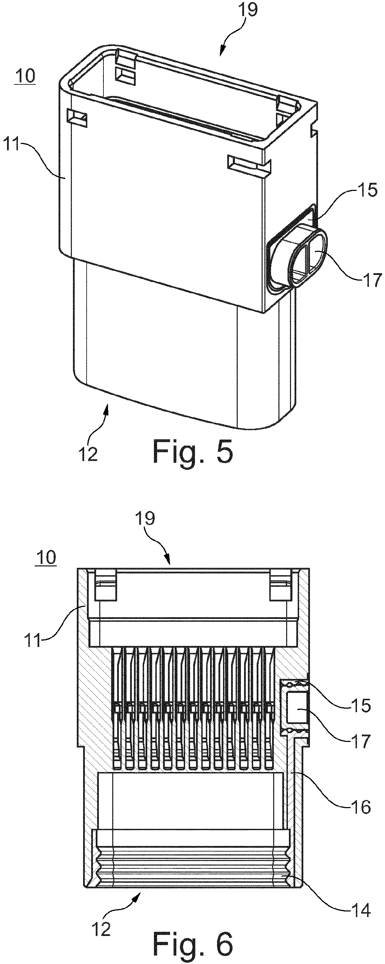

As it is understood from Figs. 1, 2, 3, 5, and 6 together with Figs. 9, 10, 11, and 13, the first opening 12 is configured to receive a counter connector. Moreover, as depicted in Fig. 5 and Fig. 6 a terminal position assurance (TPA) element 17 is arranged in the second opening 13, and the housing body 11 has a third opening 19 which is configured to receive a terminal. Thereby a central axis of the first opening 12 is perpendicular to a central axis of the second opening 13. Hence, the terminal position assurance element 17 can perpendicularly engage with a terminal, as e.g. depicted in Fig. 13.

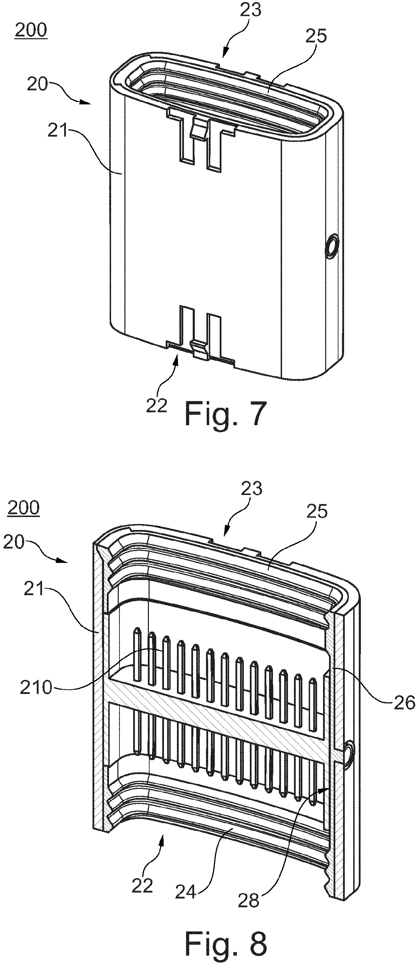

Further, Figs. 7 and 8 depict an electrical connector 200 with a connector housing 20 according to a second embodiment of the present disclosure. The connector housing 20 comprises a housing body 21 having a first opening 22 and a second opening 23. Moreover, the connector housing 20 comprises a first seal 24, a second seal 25, and a connection element 26 connecting the first seal 24 and the second seal 25. Said first seal 24 is molded to inner walls of the first opening 22 and the second seal 25 is molded to inner walls of the second opening 23, wherein the first seal 24, the second seal 25, and the connection element 26 are integrally formed.

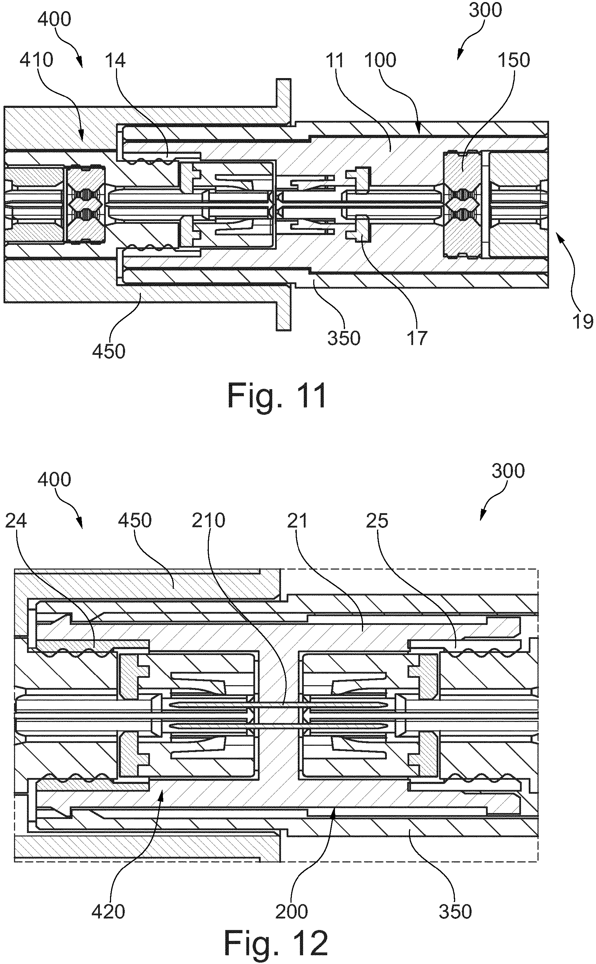

As it is understood from Figs. 7 and 8 together with Figs. 10 and 12, the first opening 22 and the second opening 23 are each configured to receive a counter connector, wherein a central axis of the first opening 22 is parallel to a central axis of the second opening 23.

In the connector housings 10; 20 according to the first and the second embodiment of the present disclosure, the first seal 14; 24, the second seal 15; 25, and the connection element 16; 26 are injection molded.

Moreover, as shown in Figs. 3, 4, 6, and 8, the connection elements 16; 26 of the first and the second embodiment have an elongated shape which extends along an inside of the housing body 11; 21. Thereby, as in Fig. 4, the connection element 16 has a substantially circular cross-section.

Furthermore, as depicted in Fig. 2 (seals and connection element hidden) and Fig. 8 the housing bodies 11; 21 of the first and the second embodiment each comprise a channel 18; 28 through which the connection element 16; 26 extends. Thereby the respective channels 18; 28 extend from the first opening 12; 22 to the second opening 13; 23.

As illustrated by Figs. 1 and 8, in the first and the second embodiment the first seal 14; 24 and the second seal 15; 25 are circumferential seals, wherein the first seal 14; 24 and the second seal 15; 25 are flush with an outside surface of the housing body 11; 21.

As mentioned above, Figs. 7 and 8 depict an electrical connector 200. As can be further seen in Fig. 8, the electrical connector 200 comprises an electrical conductor 210 being arranged inside the connector housing 20 which was previously described. Thereby the electrical conductor 210 comprises several electrical contact pins extending from the first opening 22 into second opening 23. Particularly, the electrical connector 200 is a shunt module.

Further, in Figs. 9, 10, 11, and 13 an electrical connector 100 comprising the connector housing 10, as described above, is depicted. The electrical connector 100 comprises an electrical conductor 110 being arranged inside the connector housing 10. Thereby it is understood that only in Fig. 13 the electrical conductor is shown, whereas in the other Figs. 9 to 11 it is hidden for the sake of simplicity. As schematically illustrated in Fig. 13, the electrical conductor 110 is a terminal being received inside the third opening 19. Thereby a terminal position assurance element 17 engaging with the terminal is arranged in the second opening 13.

It is understood that when the counter connector 410 is inserted into the first opening 12 (see Fig. 11) and the terminal position assurance element 17 is inserted into the second opening 13 (see Figs. 11 and 13) the inside of the electrical connector 100 is fully sealed. Particularly as the third opening 19 is sealed by a mat seal 150 (see Figs. 11 and 13).

Figs. 9 to 13 depict a modular connector assembly 300. As in Figs. 9 and 10, the modular connector assembly 300 comprises two electrical connectors 100 and one electrical connector 200. Moreover, the modular connector assembly 300 comprises a carrier housing 350 in which the electrical connectors 100; 200 are arranged. Further, Figs. 10 to 13 also show a respective modular counter connector assembly 400 with counter connectors 410; 420 and a counter carrier housing 450.

Fig. 15 is a flowchart illustrating a method 10000 for manufacturing the connector housing 10; 20 for the electrical connector 100; 200 described above. The method comprises the step of injection molding 11000 a housing body 11; 21 with a first opening 12; 22 and a second opening 13; 23. Further, the method 10000 comprises the subsequent step of injection molding 12000 a first seal 14; 24, a second seal 15; 25, and a connection element 16; 26 with a single injection into the housing body 11; 21. Thereby the connection element 16; 26 connects the first seal 14; 24 and the second seal 15; 25. The first seal 14; 24 is injection molded to inner walls of the first opening 12; 22 and the second seal 15; 25 is injection molded to inner walls of the second opening 13; 23, wherein the first seal 14; 24, the second seal 15; 25, and the connection element 16; 26 are integrally formed.

### List of reference signs

- 10; 20: connector housing
- 11; 21: housing body
- 12; 22: first opening
- 13; 23: second opening
- 14; 24: first seal
- 15; 25: second seal
- 16; 26: connection element
- 17: terminal position assurance (TPA) element
- 18; 28: channel
- 19: third opening
- 100; 200: electrical connector
- 110; 210: electrical conductor
- 150: mat seal
- 300: modular connector assembly
- 350: carrier housing
- 400: modular counter connector assembly
- 410: counter connector
- 420: counter connector
- 450: counter carrier housing
- 10000: method for manufacturing a connector housing
- 11000: injection molding a housing body
- 12000: injection molding a first seal, a second seal, and a connection element

## Claims

1. A connector housing (10; 20) for an electrical connector (100; 200), wherein the connector housing (10; 20) comprises:
a housing body (11; 21) having a first opening (12; 22) and a second opening (13; 23);
a first seal (14; 24) and a second seal (15; 25), and
a connection element (16; 26) connecting the first seal (14; 24) and the second seal (15; 25),
wherein the first seal (14; 24) is molded to inner walls of the first opening (12; 22) and the second seal (15; 25) is molded to inner walls of the second opening (13; 23), wherein the first seal (14; 24), the second seal (15; 25), and the connection element (16; 26) are integrally formed.

2. The connector housing (10; 20) according to the preceding claim, wherein the first seal (14; 24), the second seal (15; 25), and the connection element (16; 26) are injection molded.

3. The connector housing (10; 20) according to any one of the preceding claims, wherein the connection element (16; 26) has an elongated shape which optionally extends along an inside of the housing body (11; 21), wherein further optionally the connection element (16; 26) has a substantially circular cross-section.

4. The connector housing (10; 20) according to any one of the preceding claims, wherein the housing body (11; 21) comprises a channel (18; 28) through which the connection element (16; 26) extends, wherein the channel (18; 28) optionally extends from the first opening (12; 22) to the second opening (13; 23).

5. The connector housing (10; 20) according to any one of the preceding claims, wherein the first seal (14; 24) and/or the second seal (15; 25) are circumferential seals.

6. The connector housing (10; 20) according to any one of the preceding claims, wherein the first seal (14; 24) and/or the second seal (15; 25) are flush with an outside surface of the housing body (11; 21).

7. The connector housing (10; 20) according to any one of the preceding claims, wherein at least one of the first opening (12; 22) and the second opening (13; 23) is configured to receive a counter connector.

8. The connector housing (20) according to any one of the preceding claims, wherein the first opening (22) and the second opening (23) are each configured to receive a counter connector, wherein a central axis of the first opening (22) is substantially parallel to a central axis of the second opening (23).

9. The connector housing (10) according to any one of claims 1 to 7, wherein the first opening (12) is configured to receive a counter connector and the second opening (13) is configured to receive a terminal position assurance, TPA, element (17), wherein optionally a central axis of the first opening (12) is substantially perpendicular to a central axis of the second opening (13), wherein further optionally the housing body (11) has a third opening (19) which is configured to receive a terminal.

10. The connector housing (10; 20) according to any one of the preceding claims, wherein the first seal (14; 24), the second seal (15; 25), and the connection element (16; 26) are made from a liquid silicone rubber, LSR.

11. An electrical connector (100; 200) comprising:
a connector housing (10; 20) according to any one of the preceding claims, and
an electrical conductor (110; 210) being arranged at least partially inside the connector housing (10; 20).

12. The electrical connector (100; 200) according to the preceding claim, wherein the electrical connector (100; 200) comprises a connector housing (10) according to claim 8, wherein the electrical conductor (210) comprises at least one electrical contact pin extending from the first opening (22) into second opening (23).

13. The electrical connector (100; 200) according to claim 11, wherein the electrical connector (100; 200) comprises a connector housing (10) according to claim 9, wherein the electrical conductor (110) is a terminal being at least partially received inside the third opening (19), and wherein a terminal position assurance, TPA, element (17) engaging with the terminal is arranged in the second opening (13).

14. A modular connector assembly (300) comprising:
at least one electrical connector (100; 200) according to any one of claims 11 to 13, and
a carrier housing (350) in which the at least one electrical connector (100; 200) is arranged.

15. A method (10000) for manufacturing a connector housing (10; 20) for an electrical connector (100; 200), optionally according to any one of claims 1 to 10, wherein the method comprises the following steps:
injection molding (11000) a housing body (11; 21) with a first opening (12; 22) and a second opening (13; 23), and thereafter
injection molding (12000) a first seal (14; 24), a second seal (15; 25), and a connection element (16; 26) with a single injection into the housing body (11; 21),
wherein the connection element (16; 26) connects the first seal (14; 24) and the second seal (15; 25), wherein the first seal (14; 24) is injection molded to inner walls of the first opening (12; 22) and the second seal (15; 25) is injection molded to inner walls of the second opening (13; 23), wherein the first seal (14; 24), the second seal (15; 25), and the connection element (16; 26) are integrally formed.
